Europäisches Patentamt

European Patent Office

Office européen des brevets

(11) Publication number: 0 390 483
A2

# EUROPEAN PATENT APPLICATION

(21) Application number: 90303228.2

(22) Date of filing: 27.03.90

(51) Int. Cl.⁵ **B25J 9/02, B25J 13/08, B25J 9/12**

(30) Priority: 31.03.89 GB 8907270

(43) Date of publication of application:
03.10.90 Bulletin 90/40

(84) Designated Contracting States:
AT BE CH DE DK ES FR GB GR IT LI LU NL SE

(71) Applicant: TEAMLEADER ROBOTICS LIMITED
Unit 10, Halesfield 18
Telford TF7 4QT(GB)

(72) Inventor: Johnson, Colin
17 High Street
Wheaton Aston, Shropshire ST19 9NP(GB)

(74) Representative: Cuddon, George Desmond et
al
MARKS & CLERK Alpha Tower Suffolk Street
Queensway
Birmingham B1 1TT(GB)

(54) Linear gantry robot.

(57) A fixed base (10) supports three rotary-to-linear converters (12, 13; 17, 18; 21, 22) which are driven by respective motors (12, 16, 20) and cooperate to position a tool (23) in three axes (X, Y, Z). The motors (12, 16, 20) are responsive to signals from a control circuit (30) and are directly coupled to the rotary elements (13, 17, 21) of the respective converters. The motors (12, 16, 20) are gearless, brushless, have no armature windings, pole pieces or permanent magnets, and have a resolver resolution of at least 50,000 counts per revolution. The direct drive between the motors and the converter output members has been found capable of positioning the tool (23) to within 0.01 mm of the position signalled by the control circuit (30).

EP 0 390 483 A2

## LINEAR GANTRY ROBOT

This invention relates to linear gantry robots, which are to be understood as robots for tending machines or for executing processes, and being capable of linear output movement in at least one axis, to position the distal end of an output element.

It is acknowledged to be desirable that the aforesaid distal end should be capable of being positioned at a desired location with a high degree of repeatable accuracy. It is an object of the present invention to provide a linear gantry robot of simple construction and improved repeatable accuracy.

According to the invention a linear gantry robot includes a rotary-to-linear motion converter for providing linear motion on at least one axis, an electric motor. a direct driving connection between said motor and the rotary element of said converter, a control circuit for said motor, and a device for generating feed-back signals corresponding to the position of the linear element of said converter, said motor being a gearless, brushless machine without armature windings, armature pole pieces or permanent magnets.

In a preferred embodiment said robot includes a plurality of rotary to linear converters for providing linear motion on a plurality of mutually perpendicular axes.

In a further preferred embodiment said motor has a resolver resolution of not less than 50.000 counts per revolution, and a resolver repeatability of not more than 25 arc seconds.

In a particular embodiment there is provided a relatively fixed base and a plurality of robots as above defined, each of said robots having an output member which is linearly movable in three mutually perpendicular directions.

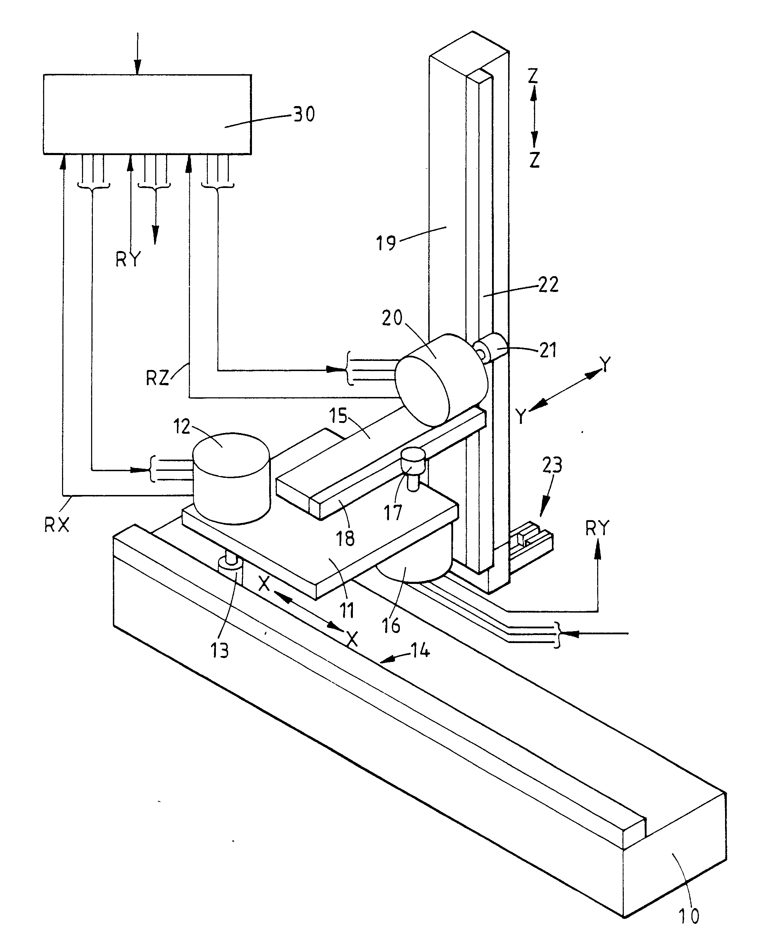

An embodiment of the invention will be described by way of example only and with reference to the accompanying drawing which shows a linear gantry robot diagrammatically.

A fixed base 10 has a platform 11 slidable thereon in the direction of the axis X-X. An electric motor 12, of the type disclosed in US patents 4458168 and 4501980 is secured to the platform 11. A pinion 13 is secured directly to the shaft of the motor 12 and is in mesh with a rack 14 secured to the base 10. A platform 15 is slidably mounted on the platform 11 for movement on the axis Y-Y. An electric motor 16 identical with the motor 12 is also secured to the platform 11 and a pinion 17 on the shaft of the motor 16 meshes with a rack 18 on the platform 15.

A column 19 is slidably supported on the platform 15 for movement in the Z-Z axis. A motor 20, identical with the motor 12, is secured to the platform 15 and a pinion 21 on the shaft of the motor 16 meshes with a rack 18 on the platform 15.

A column 19 is slidably supported on the platform 15 for movement in the Z-Z axis. A motor 20, identical with the motor 12, is secured to the platform 15 and a pinion 21 on the shaft of the motor 20 meshes with a rack 22 on the column 19. A gripping tool 23 of a known type is mounted at one end, referred to herein as the distal end, of the column 19.

The motors 12, 16. 20 are of a type available from Nippon Seiko K K under the name Megatorque. and each motor is brushes and gearless, and has no armature windings, armature pole pieces or permanent magnets. Each motor has stator windings in multiples of three. The stator windings are supplied with three current phases from a control circuit 30. Each motor includes a resolver providing signals RX, RY, RZ corresponding to the position and velocity of the element which is linearly driven by that motor. Specifically the motor used may be that having the designation AS0408, providing a speed of 4.5 rev/sec and resolver resolution of 102400 counts\rev. Alternatively a motor having the designation RS 0608 with a speed of 3 rev/sec and a resolver resolution of 153600 counts\rev may be used. These motors have resolver repeatabilities of not more than 8.4 and 12.8 arc-seconds respectively. It will be apparent that an acceptably high accuracy of partitioning of the tool 23 may be achieved with a smaller resolver resolution and a higher resolver repeatability, for example values of 50,000 counts\rev and 25 arc seconds respectively. The circuit 30 is responsive to input signals corresponding to desired positions of the tool 23 in its three axes of movement. The direct drive from each motor through a pinion to its associated rack, described above, has been found capable of positioning the tool 23 with an accuracy of 0.01 mm and a repeatability of 0.05 mm, relative to a desired position signalled by the circuit 30.

It will be understood that rotary to linear motion converters other than the rack and pinon system described, for example ballnut and leadscrew or pulley and belt, may be used. It will also be understood that any required tool may be substituted for the gripping tool 23.

It will be apparent that if the base 10 is of sufficient length a plurality of identical devices for moving a tool in three mutually perpendicular axes may be mounted thereon, the rack 14 being common to all of those devices.

## Claims

1 A linear gantry robot including an implement-carrier which comprises a rotary-to-linear motion converter (13, 14 or 17, 18 or 21, 22) for providing linear motion on at least one axis (X-X or Y-Y or Z-Z), an electric motor (12 or 16 or 20), a direct driving connection between said motor (12 or 16 or 20) and a rotary element (13 or 17 or 22) of said converter, a control circuit (30) for said motor (12 or 16 or 20), and a device for generating feed-back signals (RX or RY or RZ) corresponding to the relative positions of the rotary and linear elements of said converter, said motor (12 or 16 or 20) being a gearless, brushless machine without armature windings, armature pole pieces or permanent magnets).

2 A robot as claimed in claim 1 in which said motor has a resolver resolution of not less than 50,000 counts per revolution and a resolver repeatability of not more than 25 arc seconds.

3 A robot as claimed in claim 2 in which said motor has a resolver resolution of not less than 100,000 counts per revolution

4 A robot as claimed in any preceding claim in which said implement-carrier includes a plurality of said motors, a corresponding plurality of rotary-to-linear converters for providing linear motion on a plurality of mutually perpendicular axes, and an implement (23) carried by a linear element (22) of one of said converters.

5 A robot as claimed in claim 4 having a relatively fixed base (10) on which is mounted a linear element (14) of one of said converters (13, 14).

6 A robot as claimed in claim 5 which includes a linearly movable support (11) which carries the motor (12) and rotary element (13) of said one converter and the motor (16) and rotary element (17) of a second of said converters.

7 A robot as claimed in claim 6 in which the linear element (18) of said second converter is linearly movable relative to said support (11) and is secured to the motor (20) of a third converter (21, 22).

8 A robot as claimed in any preceding claim in which said relatively fixed base (10) has a plurality of said implement carriers mounted thereon.

9 A robot as claimed in claim 8 in which said base (10) carries a linear element (14) which is common to one rotary-to-linear converter in each of said implement carriers.